# FASCICULE DE BREVET EUROPEEN

(11) **EP 1 128 718 B1**
(45) Date de publication et mention de la délivrance du brevet: **02.10.2002**
(21) Numéro de dépôt: 99972067.5
(22) Date de dépôt: 09.11.1999
(51) Int. Cl.: A01G 9/14, A01G 31/04

(54) **PROCEDE ET DISPOSITIF POUR LE POSITIONNEMENT DE BARRES DE CULTURE LE LONG D'UN BATI DE CULTURE**
VERFAHREN UND VORRICHTUNG ZUR EINSTELLUNG DER ZUCHTTRÄGER LÄNGS EINES ZUCHTTRAGWERKES
METHOD AND DEVICE FOR POSITIONING ELONGATED GROWTH TROUGHS ALONG A CULTIVATION FIELD

(30) Priorité: 13.11.1998 BE 9800826
(43) Date de publication de la demande: 05.09.2001
(73) Titulaire: Swedeponic Belgium S.A., 1410 Waterloo (BE)
(72) Inventeur: SPARKS, Graham, East Preston,West Sussex BN16 3AJ (GB)
(74) Mandataire: Claeys, Pierre
(86) Numéro de dépôt international: BE9900142
(87) Numéro de publication internationale: WO00028806

(56) Documents cités:
- EP-A- 0 133 494
- WO-A-87/07816
- WO-A-90/03723
- WO-A-90/11008
- GB-A- 1 576 010
- US-A- 4 028 847

## Description

### DOMAINE TECHNIQUE

La présente invention a pour objet un procédé et un dispositif de déplacement et de positionnement de barres de culture dans une installation d'horticulture qui comprend un bâti sur lequel les barres, à mesure de la croissance des plantes, sont déplacées dans une direction grossièrement perpendiculaire au sens de la longueur des barres, depuis l'une des extrémités du bâti, où les plants sont placés dans les barres, jusqu'à l'autre extrémité du bâti, où les plantes sont enlevées des barres. L'installation comprend en outre un pont d'avancement qui enjambe le bâti parallèlement au sens de la longueur des barres de culture, peut être déplacé le long du bâti et porte des ergots d'entraînement qui peuvent être enclenchés dans les barres de culture pour les déplacer et les positionner le long du bâti de culture.

### TECHNIQUE PRÉALABLE

Une description de bâti de culture du type indiqué au préambule ci-dessus figure au certificat de brevet suédois SE-B-442 081 ou au certificat de brevet européen correspondant EP-B1-0 133 494. Une variante de ce bâti de culture est également décrite dans le certificat de brevet suédois SE-B462 195 et le certificat de brevet international WO 90/03 723.

Lors de la culture de plantes sur un bâti comme celui décrit ci-dessus et dans les certificats de brevets mentionnés, des barres de culture sont placées à des distances de plus en plus élevées entre elles à mesure qu'elles avancent sur le bâti, en partant de l'extrémité où les plantes sont placées dans les barres, dans le but de procurer aux plantes suffisamment d'espace pour se développer au cours de leur progression le long du bâti. Les dispositifs de positionnement des barres de culture à des distances augmentant à mesure de leur déplacement le long du bâti sont évoqués, par exemple, dans les brevets CH-A5-612 822, EP-A2-0143 349 et US-A-4 028 847. Cependant, aucun des dispositifs décrits dans ces brevets n'effectue un positionnement satisfaisant des barres de culture le long des bâtis par rapport aux autres dispositifs placés le long le bâti, comme par exemple les dispositifs d'alimentation en eau, en engrais et similaires.

Le brevet allemand DE-A1-27 32 982 permet de déplacer des barres de culture par groupes le long d'un bâti, en déposant deux ou plusieurs barres de culture sur des chariots qui peuvent être déplacés le long des bâtis et qui sont enclenchés dans un dispositif d'entraînement qui s'étend le long du bâti de culture. Toutefois, le changement de position des barres de culture les unes par rapport aux autres sur le chariot circulant doit être effectué à la main, ce qui exige beaucoup de temps lorsque ces déplacements doivent être effectués sur une grande longueur de bâti. Le brevet international WO 90/11 008 permet, lui, de déplacer les barres de culture par groupes le long d'un bâti de culture et de modifier la distance entre les barres de culture, soit immédiatement avant de commencer le déplacement, soit pendant le déplacement lui-même, soit immédiatement après le déplacement des barres de culture.

### DESCRIPTION DE L'INVENTION

Le but de la présente invention est d'obtenir, conformément au préambule, un procédé et un dispositif de déplacement et de positionnement des barres de culture qui permettent une grande liberté de choix pour le placement des barres de culture. Cet objectif est rempli par un dispositif comprenant un pont d'avancement qui enjambe le bâti parallèlement au sens de la longueur des barres de culture, peut être déplacé le long du bâti et porte des ergots d'entraînement qui peuvent être enclenchés dans les barres de culture pour les déplacer et les positionner le long du bâti de culture. Le procédé est caractérisé par le fait qu'un émetteur, qui est en liaison fixe avec le pont d'avancement et se trouve à une distance donnée (a) de la première barre de culture dans le sens de la marche, est amené signaler la présence d'une barre de culture vers l'avant, qu'une barre ou que plusieurs barres de culture sont positionnées le long du bâti de culture à une distance donnée (c) d'une barre de culture les précédant dans le sens de la marche par le fait que le mouvement du pont d'avancement est freiné et arrêté, tandis que la première barre dans le sens de la marche est déplacée sur une distance (b=a-c) à partir du moment où l'émetteur a été amené à indiquer la position de la barre la précédant.

Le pont d'avancement est actionné, de préférence, par un moteur électrique de transport comprenant un premier dispositif d'indication angulaire qui est amené à émettre des signaux électriques qui représentent la rotation du moteur de transport exprimée en unités angulaires. On amène le moteur de transport à ne tourner que sur un nombre déterminé d'unités angulaires qui correspond à la distance de freinage (b), après que l'on aura amené l'émetteur à signaler la position de la barre de culture le précédant dans le sens de la marche. Dans une autre réalisation de cette invention, on amène un groupe de barres de culture, entraînées par les ergots du pont d'avancement, à prendre des distances les unes par rapport aux autres à l'aide du dispositif de positionnement de l'un des ergots d'entraînement, qui est commandé par un moteur électrique de positionnement. Le moteur de positionnement comprend un second émetteur d'unités angulaires que l'on amène à émettre des signaux électriques représentant sa rotation exprimée en unités angulaires. Le moteur de positionnement est en outre amené à ne tourner que sur un nombre donné d'unités angulaires, qui correspond à la distance entre les ergots d'entraînement par rapport à une position zéro.

Le dispositif de réalisation du procédé de l'invention se compose d'un bâti de culture sur lequel les barres sont déplacées, à mesure du développement des plantes, dans une direction grossièrement perpendiculaire au sens de la longueur des barres, à l'aide d'un pont d'avancement qui enjambe le bâti parallèlement au sens de la longueur des barres de culture, peut être déplacé le long du bâti et porte des ergots d'entraînement qui peuvent être enclenchés dans les barres de culture pour les déplacer le long du bâti de culture. Ce dispositif est caractérisé par le fait que le pont d'avancement est entraîné par un moteur électrique de transport comprenant un premier dispositif d'indication angulaire qui transmet à un système de commande informatisé des signaux électriques représentant la rotation du moteur de transport, et que le pont d'avancement porte un émetteur qui signale au système de commande la présence d'une barre de culture le précédant dans le sens de la marche.

Le pont d'avancement porte, de préférence, au moins un dispositif de définition de la distance respective entre les ergots d'entraînement qui comporte au moins un moteur de positionnement comprenant un second dispositif d'indication angulaire, qui transmet au système de commande des signaux électriques représentant la rotation du moteur de positionnement.

Le bâti de culture est constitué de préférence par un seul bâti continu mais peut également être constitué de plusieurs bâtis placés par exemple à la suite les uns des autres ou sur plusieurs plans. D'autres détails supplémentaires sur le procédé et le dispositif constituant l'invention ressortent de la description des figures ci-dessous.

Le procédé et le dispositif de l'invention permettent un déplacement et un positionnement des barres de culture dans une installation d'horticulture qui permettent une grande flexibilité en ce qui concerne le placement des barres de culture les unes par rapport aux autres le long des bâtis. L'absence de tout dispositif mécanique de positionnement permet une conversion rapide d'un type de culture à l'autre dans l'installation en question, et pratiquement toutes les variables de positionnement sont gérées par le système de commande informatisé.

### DESCRIPTION CONFORME AUX FIGURES

L'invention est décrite ci-dessous sous la forme d'exemples de réalisation illustrés par les figures en annexe.

La figure 1 présente une vue en perspective d'une installation de culture pourvue d'un pont d'avancement mobile pour barres de culture.

La figure 2 montre un morceau de barre de culture vue en perspective.

La figure 3 est une coupe transversale du pont d'avancement le long de la ligne A-A de la figure 1.

La figure 4 est une vue simplifiée d'une partie de l'installation de culture, en coupe transversale le long de la ligne A-A de la figure 1.

La figure 5 est un graphique de la vitesse de déplacement d'une barre de culture le long du bâti de culture lors du positionnement de la barre de culture.

La figure 6 est une réalisation alternative de l'installation de culture conformément à l'invention en coupe transversale correspondant à celle de la figure 3.

La figure 7 est une partie agrandie du dispositif représenté à la figure 6.

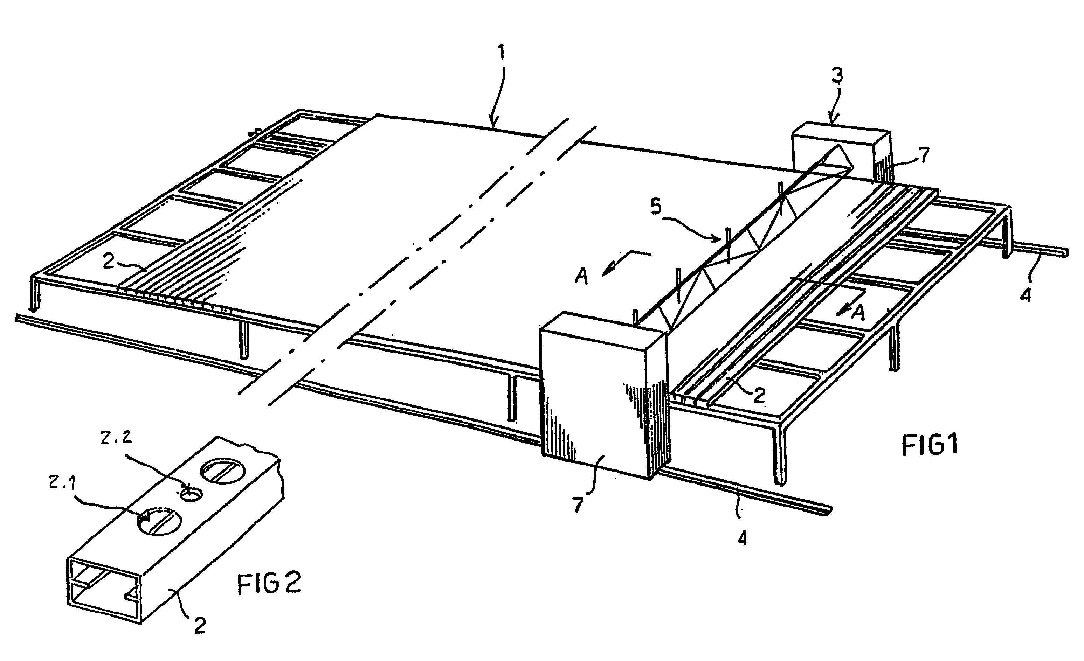

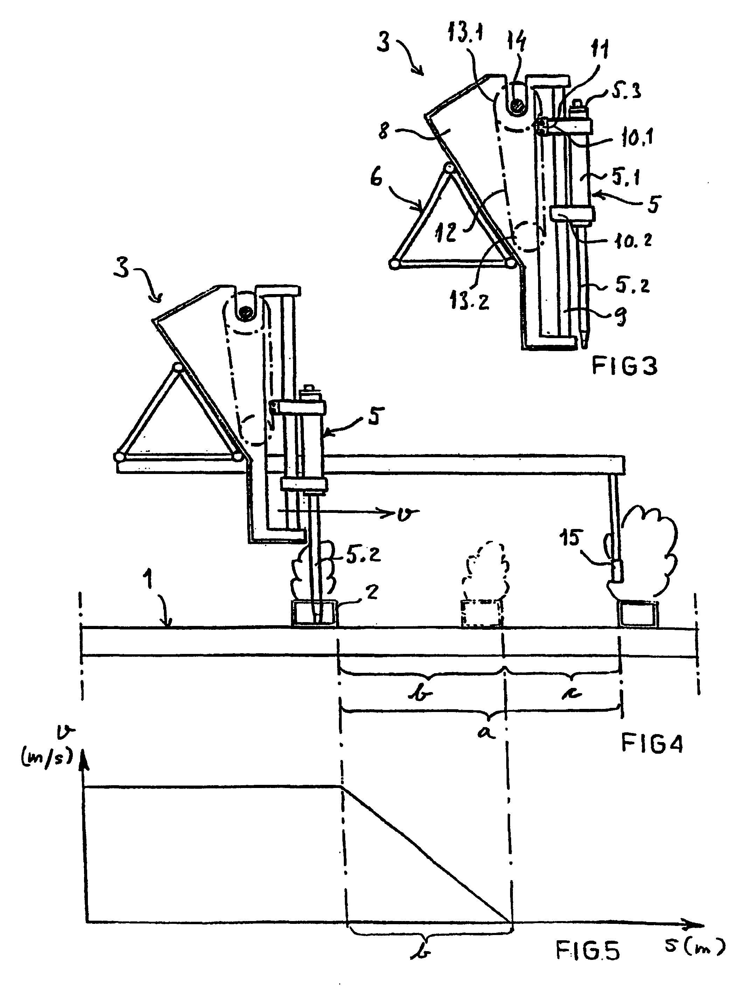

L'installation de culture représentée à la figure 1 comprend un bâti de culture 1 qui consiste en un cadre portant un grand nombre de barres de culture 2 mises les unes le long des autres. Chaque barre de culture 2 est de coupe transversale rectangulaire, voir figure 2, et comporte des orifices 2.1 sur le dessus, dans lesquels les pots de plantes sont placés. Le pont d'avancement 3 se déplace sur des rails 4 aménagés sur chacun des bords du bâti de culture 1, et enjambe le bâti de culture 1 parallèlement aux barres de culture 2. Les barres de culture 2 sont déplacées sur le bâti de culture 1 par le fait que les ergots d'entraînement 5, mobiles en hauteur et aménagés sur le pont d'avancement 3, sont amenés à descendre dans les trous 2.2 d'une barre de culture 2 et à déplacer cette barre perpendiculairement au sens de sa longueur, par glissement sur le cadre du bâti 1, en direction de l'extrémité du bâti de culture 1, où les pots de plantes sont extraits des barres de culture 2. Le pont d'avancement 3 permet de déplacer toutes les barres de culture 2, par étapes, vers cette extrémité du bâti de culture 1 et de les placer à des distances croissantes les unes par rapport aux autres pour donner aux plantes un espace de développement qui augmente à mesure qu'elles avancent sur le bâti de culture 1.

Le pont d'avancement 3 est constitué par une poutre à croisillons 6 lancée entre deux trains de roues comme indiqué à la figure 1. La poutre à croisillons 6 est représentée en coupe sur les figures 3 et 4. Le pont d'avancement 3 porte, d'une part, un moteur électrique de transport branché sur les roues des trains de roues 7, d'autre part un moteur électrique d'entraînement qui est branché sur les ergots d'entraînement 5 des barres de culture 2. Ces moteurs ne sont pas représentés sur les figures. Les ergots d'entraînement 5 sont répartis également sur la longueur du pont d'avancement 3 pour donner une répartition égale de la charge sur la barre de culture 2 lors de son déplacement le long du bâti de culture 1. Chaque ergot d'entraînement 5 est fixé sur un tasseau 8 amarré sur la poutre à croisillons 6 du pont d'avancement 3. Le tasseau 8 porte également deux guides parallèles de forme cylindrique 9 placés verticalement et le long desquels les ergots d'entraînement 5 se déplacent, à l'aide d'une bride supérieure 10.1 et d'une bride inférieure 10.2 qui maintiennent l'ergot d'entraînement 5.

Chacun des ergots d'entraînement 5 se compose d'un tube d'entraînement cylindrique 5.1, à l'intérieur duquel se déplace une tige d'entraînement 5.2. En position haute, la tige d'entraînement 5.2 est suspendue dans une bague d'arrêt 5.3 qui est fixée à la tige d'entraînement 5.2 et s'appuie sur l'extrémité supérieure du tube d'entraînement 5.1, mais est poussée vers le haut dans le tube d'entraînement 5.2 lorsque son extrémité inférieure, lorsqu'elle descend, touche le fond de la barre de culture 2. La bride supérieure 10.1 est liée par une patte 11 à une chaîne d'ergot d'entraînement 12, qui court sur une roue de guidage supérieure 13.1 et une roue de guidage inférieure de 13.2. La roue de guidage supérieure 13.1 est entraînée par le moteur d'entraînement mentionné ci-dessus, non représenté, par un arbre 14 placé dans le sens de la longueur de la poutre à croisillons 6. Grâce au moteur d'entraînement et à l'arbre d'entraînement 14 commun à tous les ergots d'entraînement 5, tous les ergots d'entraînement 5 peuvent être abaissés simultanément et amener les tiges d'entraînement 5.2 à s'enclencher sur une barre 2 et, respectivement, haussés et lâcher la barre après déplacement de celle-ci le long du bâti de culture 1.

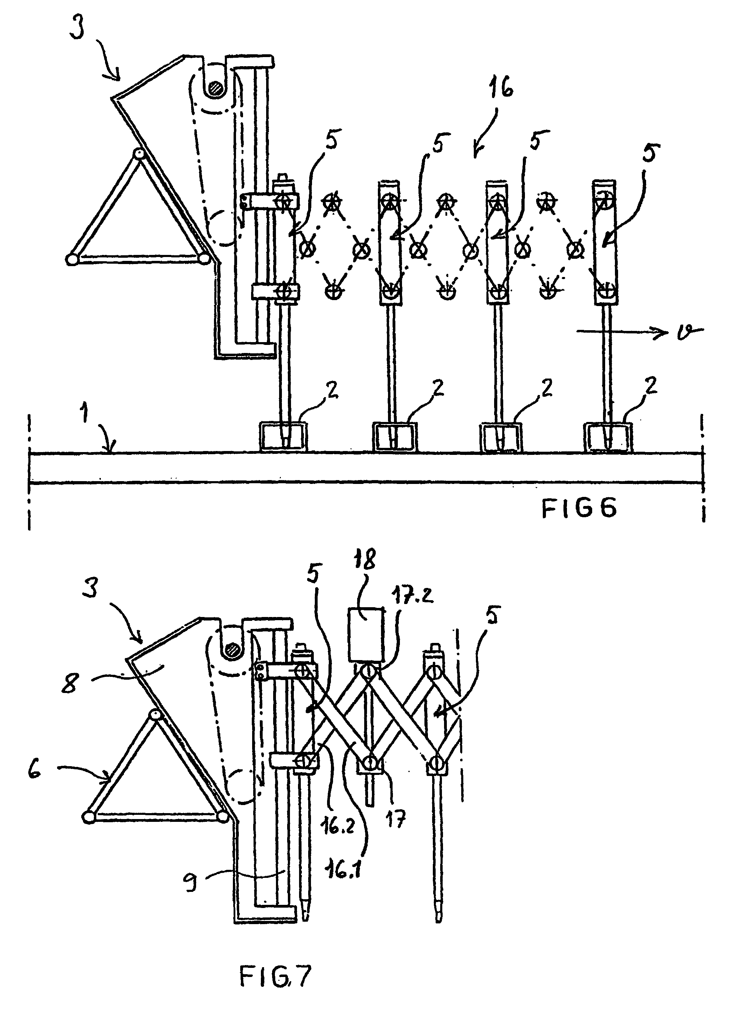

Un système de commande informatisé sert à placer les barres de culture 2 dans les positions désirées le long des bâtis de culture 1 comme indiqué à la figure 4. Le pont d'avancement 3 se trouve ici en mouvement, avec une vitesse (v), dans le sens de la flèche et transporte une barre de culture 2 dans laquelle les tiges d'entraînement 5.2 sont enclenchées. Les ergots d'entraînement 5 sont alors abaissés en position basse. Un émetteur 15 est en liaison fixe avec le pont d'avancement 3 et se trouve à une distance donnée du pont dans le sens de la marche, indiquée de manière simplifiée à la figure 4, ce qui implique que la distance (a), entre le côté avant de la barre de culture 2 qui est en cours de déplacement et l'émetteur 15, est connue. Si la barre de culture 2, qui est en cours de déplacement, doit être positionnée à une distance donnée (c) d'une barre de culture la précédant, le mouvement de la barre de culture 2 en cours de déplacement doit être freiné et arrêté après un déplacement sur une distance calculable (b=a-c) à partir du moment où l'émetteur 15 a indiqué la position de la barre qui précède. On obtient ce résultat en amenant le moteur de transport du pont d'avancement 3 à ne tourner que sur un nombre déterminé d'unités angulaires qui correspond à la distance de freinage (b), après que l'émetteur 15 ait indiqué la position de la barre qui précède. La distance entre deux barres de culture 2 peut donc être réglée par programmation du nombre d'unités angulaires sur lesquelles le moteur d'entraînement doit tourner, après que l'émetteur 15 ait signalé la présence d'une barre en aval. La figure 5 représente par un graphique la manière dont la vitesse, initialement régulière (v), de la barre de culture 2 en déplacement est réduite à zéro lors de son passage à la distance de freinage (b). En ce cas, le freinage s'effectue de manière à réduire la vitesse (v) à zéro de manière linéaire.

Dans une réalisation alternative du dispositif de l'invention, présentée à la figure 6, quatre ergots d'entraînement 5 sont alignés dans le sens de la marche des barres de culture 2 sur un nombre de points d'entraînement répartis également sur la longueur du pont d'avancement 3. L'ergot d'entraînement 5, qui est fixé le plus près de la poutre à croisillons 6 du pont d'avancement 3, est mobile en hauteur, comme il est décrit ci-dessus au sujet de la réalisation avec un seul ergot d'entraînement 5 à chaque point d'entraînement sur le pont d'avancement 3, et porte à son tour encore trois ergots d'entraînement 5 sur un bras articulé 16 qui s'élance horizontalement dans le sens de la marche, à partir du pont d'avancement 3. Deux ergots d'entraînement 5 placés l'un contre l'autre sont, à cet effet, reliés à deux paires de bras articulés 16.1, qui se composent chacune de deux bras articulés 16.2 réunis par flexion à leur point médian. Le bras articulé 16.1 le plus proche du pont d'avancement 3 est d'une part relié par rotation à la bride supérieure 10.1 et, respectivement, à la bride inférieure 10.2 qui porte l'ergot d'entraînement5 le plus proche du pont, d'autre part relié par rotation au bras articulé 16.1 suivant, à son tour relié par rotation à l'ergot d'entraînement 5 suivant, compté à partir du pont. Les centres fixes communs aux deux bras articulés 16.1 les plus proches du pont 3 peuvent être rapprochés ou éloignés l'un de l'autre, puis fixés à l'aide de la vis 17 qui entre dans l'écrou 17.1 au centre fixe commun, et qui est entraînée par le moteur de positionnement 18 fixé dans le carter 17.2 au centre fixe commun supérieur. Lorsque le moteur de positionnement 18 est activé de manière à ce que la vis 17 entraîne l'écrou 17.1 vers le carter 17.2, le bras de ciseau 16 est compressé, et les trois ergots d'entraînement externes 5 du bras articulé 16 sont tendus depuis le pont d'avancement 3.

L'extension ou la rétraction du bras articulé 16 sont effectuées de manière à ce que les ergots d'entraînement 5 se placent à des distances mutuelles égales et déterminées à l'avance, ce qui permet de placer les barres de culture 2, qui sont déplacées à l'aide des tiges d'entraînement 5.2, à la distance désirée les unes par rapport aux autres. Le déplacement sur ces distances relatives peut en outre être effectué en même temps que le pont d'avancement 3 se déplace le long du bâti de culture 1 lors du déplacement des barres de culture 2 le long du bâti de culture 1. Le préréglage des distances mutuelles doit être effectué de préférence par le système informatisé utilisé pour le positionnement du pont d'avancement 3 le long du bâti de culture 1. Dans ce but, le moteur de positionnement 18 peut, par exemple, comprendre un émetteur angulaire qui représente différentes distances entre les ergots d'entraînement 5 par différentes valeurs angulaires auprès du moteur, à partir d'une valeur zéro donnée. L'information sur la distance mutuelle entre les ergots d'entraînement 5 du bras articulé 16 permet, comme dans l'exemple décrit ci-dessus, de calculer la position des ergots d'entraînement 5 les plus à l'avant du pont d'avancement dans le sens de la marche et d'en déduire également la distance (a) entre l'émetteur 15 du pont d'avancement 3 et la barre de culture 2 le plus à l'avant dans le sens de la marche. Lors du positionnement de la barre de culture 2 avant à une distance donnée (c) de la barre qui le précède, le mouvement de la barre de culture 2 en cours de déplacement doit donc être freiné et arrêté après avoir été déplacé sur la distance calculable (b=a-c) à partir de la position de la barre précédente indiquée par l'émetteur 15. Ce déplacement est obtenu de la même manière que dans l'exemple ci-dessus.

Dans l'exemple illustré, le bras articulé 16 ne s'étend que d'un côté du pont d'avancement 3. Il entre cependant dans le cadre de l'invention de créer un autre bras articulé de l'autre côté du pont d'avancement 3 et de créer deux bras articulés qui s'élancent dans des directions différentes par rapport au pont d'avancement 3. Cela permet de déplacer les barres de culture 2 le long du bâti de culture 1 et de les positionner par groupes avec des distances différentes entre les groupes.

Le même bras articulé peut également être disposé de manière à s'étendre des deux côtés du pont d'avancement 3, dans son sens de la marche, pour augmenter l'accessibilité des barres de culture sur un bâti de culture de dimensions d'encastrement limitées. On peut également disposer les moteurs de positionnement entre chaque ergot d'entraînement sur le bras articulé 16, ce qui permet, par exemple, d'augmenter progressivement, vers l'aval, la distance entre les ergots d'entraînement.

Les exemples ci-dessus supposent qu'aussi bien le moteur de transport du pont d'avancement 3 que le moteur de positionnement des ergots d'entraînement 5 sont des moteurs électriques. Il entre cependant dans le cadre de l'invention d'utiliser également d'autres moteurs qui permettent une transmission de signal équivalente entre le moteur et le système de commande des mouvements du pont d'avancement 3 et des ergots d'entraînement 5.

## Revendications

1. Procédé pour le déplacement et le positionnement de barres de culture (2) dans une installation horticole (1) comprenant un bâti de culture sur lequel les barres de culture sont déplacées, au cours de la croissance des plantes, dans une direction grossièrement perpendiculaire par rapport au sens de la longueur des barres, depuis une extrémité du bâti où les plantes sont placées dans les barres jusqu'à l'autre où les plantes sont enlevées des barres, à l'aide d'un pont d'avancement (3) qui enjambe le bâti de culture parallèlement au sens de la longueur des barres, et qui se déplace le long du bâti de culture et porte des ergots d'entraînement (5) qui peuvent être enclenchés dans les barres de culture et les déplacer le long du bâti de culture, **caractérisé par** un émetteur (15) en liaison fixe avec le pont d'avancement qui, se trouvant à une distance donnée (a) de la barre le plus en aval, est amené à signaler la présence d'une barre vers l'avant,(2) qu'une barre de culture ou un groupe de barres de culture sont positionnés le long du bâti de culture à une distance donnée (c) d'une barre qui se trouve en aval sur le bâti de culture, par le fait que le mouvement du pont d'avancement est freiné et arrêté tandis que la barre la plus en aval est déplacée sur une distance (b=a-c) à partir du moment où l'émetteur a été amené à indiquer la position de la barre qui le précède.

2. Procédé conforme à la revendication 1, **caractérisé par** un pont d'avancement entraîné par un moteur électrique de transport comprenant un premier dispositif d'indication angulaire, qui est amené à transmettre des signaux électriques représentant la rotation du moteur de transport exprimée en unités angulaires, et que le moteur de transport est amené à n'effectuer sa rotation que sur un nombre donné d'unités angulaires qui correspond à la distance de freinage (b) après que l'émetteur ait été amené à signaler la position de la barre de culture le précédant dans le sens de la marche.

3. Procédé conforme aux revendications 1 ou 2, **caractérisé par** un groupe de barres de culture placé sur des positions respectives données par les ergots d'entraînement du pont d'avancement, à l'aide d'un dispositif de positionnement commandé par un moteur électrique de positionnement comprenant un second dispositif d'indication angulaire qui est amené à transmettre des signaux électriques représentant la rotation du moteur de positionnement exprimée en unités angulaires, et que le moteur de positionnement est amené à n'effectuer sa rotation que sur un nombre déterminé d'unités angulaires à partir d'une position zéro qui correspond à la distance entre les ergots d'entraînement.

4. Dispositif pour la réalisation du procédé, selon les revendications précédentes, pour le déplacement et le positionnement de barres de culture (2) dans une installation horticole comprenant un bâti de culture (1) sur lequel les barres de culture (2) sont déplacées, au cours de la croissance des plantes, dans une direction grossièrement perpendiculaire au sens de la longueur des barres (2), depuis l'une des extrémités où les plantes sont placées dans les barres, jusqu'à l'autre extrémité où les plantes sont enlevées des barres (2), à l'aide d'un pont d'avancement (3) entraîné par un moteur électrique de transport qui enjambe le bâti de culture (1) parallèlement au sens de la longueur des barres (2) se déplace le long du bâti de culture (1) et porte des ergots d'entraînement (5) qui peuvent être enclenchés dans les barres de culture (2) et les déplacer le long du bâti de culture (1) **caractérisé en ce que** le pont d'avancement (3) comprend un premier dispositif d'information angulaire qui transmet des signaux électriques représentant la rotation du moteur de transport à un système de commande informatisé et **en ce que** le pont d'avancement (3) porte un émetteur (15), qui signale au système de commande la présence d'une barre de culture 2 le précédant dans le sens de la marche.

5. Dispositif selon la revendication 4, **caractérisé par** un ou plusieurs ergots d'entraînement (5) qui sont alignés dans le sens de la marche des barres de culture (2) sur un certain nombre de points d'entraînement, le long du pont d'avancement (3) et par le pont d'avancement (3) qui porte au moins un dispositif de positionnement (16) pour le réglage de la distance mutuelle entre les ergots d'entraînement (5) comprenant au moins un moteur de positionnement avec un second dispositif d'information angulaire qui transmet des signaux électriques représentant la rotation du moteur de positionnement à un système de commande.

6. Dispositif selon la revendication 5, **caractérisé par** des ergots d'entraînement (5) disposés en ligne, portés par un bras de positionnement (16) grossièrement horizontal qui se déplace en hauteur par rapport au pont d'avancement(3) et permet une modification de la distance entre les ergots d'entraînement (5) placés les uns à côté des autres (5)

7. Dispositif selon la revendication 6, **caractérisé par** un bras de positionnement 16 composé d'un bras articulé comprenant un ou plusieurs bras articulés 16.1 disposés entre des ergots d'entraînement 5 placés les uns contre les autres sur le bras.

8. Dispositif selon les revendications 6 ou 7 **caractérisé par** un ergot d'entraînement 5 placé sur chaque bras de positionnement respectif 16, qui est relié au pont d'avancement 3, se déplace en hauteur par rapport au pont et porte les autres ergots d'entraînement 5 sur le bras.

## Claims

1. Method for moving and positioning culture bars (2) in a horticultural installation (1) comprising a culture frame on which the culture bars are moved, as the plants grow, in a direction roughly perpendicular to the direction of the length of the bars, from one end of the frame where the plants are placed in the bars, to the other where the plants are taken out of the bars, using a travelling bridge (3) that straddles the culture frame parallel to the direction of the length of the bars and that moves along the culture frame and has drive pins (5) that can be engaged in the culture bars and can move them along the culture frame, the method being **characterized by** a transmitter (15) in a fixed connection with the travelling bridge, which, being at a given distance (a) from the most downstream bar, is caused to signal the presence of a bar in front (2), in that a culture bar or a group of culture bars are positioned along the culture frame at a given distance (c) from a bar situated downstream on the culture frame, and in that the movement of the travelling bridge is braked and stopped while the most downstream bar is moved over a distance (b=a-c) from the instant at which the transmitter was caused to indicate the position of the bar preceding it.

2. Method according to Claim 1, **characterized by** a travelling bridge driven by an electric handling motor comprising a first angular-indication device, which is caused to transmit electrical signals representing the rotation of the handling motor expressed in angular units, and in that the handling motor is caused to rotate only through a given number of angular units that corresponds to the braking distance (b) after the Lransmitter has been caused to signal the position of the culture bar preceding it in the direction of advance.

3. Method according to Claim 1 or 2, **characterized by** a group of culture bars placed in respective positions given by the drive pins of the travelling bridge, with the aid of a positioning device controlled by an electric positioning motor comprising a second angular-indication device which is caused to transmit electrical signals representing the rotation of the positioning motor expressed in angular units, and in that the positioning motor is caused to rotate only through a defined number of angular units from a zero position that corresponds to the distance between the drive pins.

4. Device for carrying out the method, according to the preceding claims, for moving and positioning culture bars (2) in a horticultural installation comprising a culture frame (1) on which the culture bars (2) are moved, as the plants grow, in a direction roughly perpendicular to the direction of the length of the bars (2), from one of the ends where the plants are placed in the bars to the other where the plants are taken out of the bars (2), using a travelling bridge (3) driven by an electric handling motor, that straddles the culture frame (1) parallel to the direction of the length of the bars (2), moves along the culture frame (1) and has drive pins (5) that can be engaged in the culture bars (2) and can move them along the culture frame (1), the method being **characterized in that** the travelling bridge (3) comprises a first angular-information device that transmits electrical signals representing the rotation of the handling motor to a computerized control system and **in that** the travelling bridge (3) has a transmitter (15) that signals to the control system the presence of a culture bar (2) preceding it in the direction of advance.

5. Device according to Claim 4, **characterized by** one or more drive pins (5) that are aligned in the direction of advance of the culture bars (2) at a certain number of drive points, along the travelling bridge (3) and by the travelling bridge (3) that has at least one positioning device (16) for adjusting the distance between the drive pins (5), comprising at least one positioning motor with a second angular-information device that transmits electrical signals representing the rotation of the positioning motor to a control system.

6. Device according to Claim 5, **characterized by** drive pins (5) arranged in a line and carried by a roughly horizontal positioning arm (16) that moves up and down relative to the travelling bridge (3) and enables the distance between the drive pins (5) placed side by side to be modified.

7. Device according to Claim 6, **characterized by** a positioning arm (16) composed of an articulated arm comprising one or more articulated arms (16.1) arranged between drive pins (5) placed against each other on the arm.

8. Device according to Claim 6 or 7, **characterized by** a drive pin (5) placed on each respective positioning arm (16), which is connected to the travelling bridge (3), moves up and down relative to the bridge and carries the other drive pins (5) on the arm.

## Patentansprüche

1. Verfahren zum Verschieben und Positionieren von Zuchtträgem (2) in einer Gartenbauanlage, die ein Zuchttragwerk (1) umfasst, auf dem die Zuchtträger im Laufe des Wachstums der Pflanzen in einer im Wesentlichen zur Längsrichtung der Träger senkrechten Richtung von einem Ende des Tragwerks, wo die Pflanzen in den Trägem angebracht werden, bis zum anderen Ende, wo die Pflanzen aus den Trägern entnommen werden, mit Hilfe einer Vorschubbrücke (3) verschoben werden, die das Zuchttragwerk parallel zur Längsrichtung der Träger überspannt und die sich auf dem Zuchttragwerk entlangbewegt und Mitnahmestifte (5) trägt, die in die Zuchtträger gesteckt werden können, um diese längs des Zuchttragwerks zu verschieben,
**gekennzeichnet durch** einen Sender (15), fest verbunden mit der Vorschubbrücke, der einen bestimmten Abstand (a) von dem hintersten Träger (2) hat und dazu dient, die Präsenz eines weiter vorn bzw. vor ihm befindlichen Trägers zu signalisieren, so dass ein Zuchtträger oder eine Gruppe von Zuchtträgem längs des Zuchttragwerks mit einem bestimmten Abstand (c) von diesem signalisierten Träger positioniert werden kann, indem die Bewegung der Vorschubbrücke abgebremst und angehalten wird, wobei der hinterste Träger ab dem Zeitpunkt, wo der Sender die Position des vor ihm befindlichen Trägers signalisiert, über eine Distanz (b=a-c) verschoben wird.

2. Verfahren nach Anspruch 1, **gekennzeichnet durch** eine Vorschubbrücke, angetrieben **durch** einen Elektromotor, einen Winkelmessgeber umfassend, der elektrische Signale liefert, die die Drehung des Antriebsmotors angeben, ausgedrückt in Winkeleinheiten, und **dadurch**, dass der Antriebsmotor seine Drehung nur über eine bestimmte Anzahl von Winkeleinheiten ausführt, die der Bremsdistanz (b) entsprechen, nachdem der Sender die Position des in Fortbewegungsrichtung vor ihm befindlichen Trägers signalisiert hat.

3. Verfahren nach den Ansprüchen 1 oder 2, **gekennzeichnet durch** eine Gruppe von Zuchtträgern, jeweils in Positionen befindlich, die **durch** die Mitnahmestifte der Vorschubbrücke bestimmt werden mit Hilfe einer Positionierungsvorrichtung, gesteuert **durch** einen elektrischen Positionierungsmotor, der einen zweiten Winkelmessgeber umfasst, der elektrische Signale liefert, die die Drehung des Positionierungsmotors angeben, ausgedrückt in Winkeleinheiten,
und **dadurch**, dass der Positionierungsmotor, ausgehend von einer Nullstellung, seine Drehung nur über eine bestimmte Anzahl von Winkeleinheiten ausführt, dem Abstand zwischen den Mitnahmestiften entsprechend.

4. Vorrichtung zur Durchführung des Verfahrens nach den vorangehenden Ansprüchen zum Verschieben und Positionieren von Zuchtträgern (2) in einer Gartenbauanlage, die ein Zuchttragwerk (1) umfasst, auf dem die Zuchtträger (2) im Laufe des Wachstums der Pflanzen in einer im Wesentlichen zur Längsrichtung der Träger (2) senkrechten Richtung von einem Ende des Tragwerks, wo die Pflanzen in den Trägern angebracht werden, bis zum anderen Ende, wo die Pflanzen aus den Trägem (2) entnommen werden, mit Hilfe einer durch einen Elektromotor angetriebenen Vorschubbrücke (3) verschoben werden, die das Zuchttragwerk (1) parallel zur Längsrichtung der Träger (2) überspannt und sich auf dem Zuchttragwerk entlangbewegt und Mitnahmestifte (5) trägt, die in die Zuchtträger (2) gesteckt werden können, um diese längs des Zuchttragwerks zu verschieben,
**dadurch gekennzeichnet, dass** die Vorschubbrücke (3) eine erste Winkelinformationseinrichtung umfasst, die elektrische Signale, welche die Drehung des Antriebsmotors angeben, zu einem computerisierten Steuersystem überträgt,
und dadurch, dass die Vorschubbrücke (3) einen Sender (15) trägt, der dem Steuersystem die Präsenz eines Zuchtträgers (2) signalisiert, der sich in Fortbewegungsrichtung vor ihm befindet.

5. Vorrichtung nach Anspruch 4, **gekennzeichnet durch** einen oder mehrere Mitnahmestifte (5), die längs der Vorschubbrücke (3) in der Fortbewegungsrichtung der Zuchtträger (2) auf eine bestimmte Anzahl von Mitnahmepunkten ausgerichtet sind,
und **durch** die Vorschubbrücke (3), die wenigstens eine Positioniereinrichtung (16) zur Einstellung des gegenseitigen Abstands zwischen den Mitnahmestiften (5) umfasst und die mindestens einen Positionierungsmotor enthält, mit einer zweiten Winkelinformationseinrichtung, die elektrische Signale, welche die Drehung des Antriebsmotors angeben, zu einem computerisierten Steuersystem überträgt.

6. Vorrichtung nach Anspruch 5, **gekennzeichnet durch** Mitnahmestifte (5), linienförmig angeordnet, getragen **durch** einen Positionierungsarm (16), im Wesentlichen horizontal, der sich in Bezug auf die Vorschubbrücke (3) nach oben bewegt und eine Veränderung des Abstands zwischen den nebeneinander befindlichen Mitnahmestiften (5) ermöglicht.

7. Vorrichtung nach Anspruch 6, **gekennzeichnet durch** einen Positionierungsarm (16), gebildet **durch** einen Gelenkarm, einen oder mehrere angelenkte Arm (16.1) umfassend, angeordnet zwischen Mitnahmestiften (5), die sich in dem Arm nebeneinander bzw. eng beieinander befinden.

8. Vorrichtung nach den Ansprüchen 6 oder 7, **gekennzeichnet durch** einen Mitnahmestift (5), jeweils in jedem Positionierungsarm (16) angeordnet, der mit der Vorschubbrücke (3) verbunden ist, sich in Bezug auf die Brücke nach oben verschiebt und die anderen Mitnahmestifte (5) des Arms trägt.
